(19) Europäisches Patentamt
European Patent Office
Office européen des brevets

(11) Veröffentlichungsnummer: **0 130 336**
**B1**

# (12) EUROPÄISCHE PATENTSCHRIFT

(45) Veröffentlichungstag der Patentschrift: **09.08.89**

(51) Int. Cl.[4]: **C 09 D 11/10**

(21) Anmeldenummer: **84105740.9**

(22) Anmeldetag: **19.05.84**

## (54) Wässrige Druckfarben für den Flexodruck und Tiefdruck.

(30) Priorität: **27.05.83 DE 3319239**

(43) Veröffentlichungstag der Anmeldung: **09.01.85 Patentblatt 85/02**

(45) Bekanntmachung des Hinweises auf die Patenterteilung: **09.08.89 Patentblatt 89/32**

(84) Benannte Vertragsstaaten: **BE CH DE FR GB IT LI NL SE**

(56) Entgegenhaltungen:
**EP-A- 0 003 516**
**EP-A- 0 019 660**
**US-A- 4 205 139**

(73) Patentinhaber: **BASF Aktiengesellschaft**
**Carl-Bosch-Strasse 38**
**D-6700 Ludwigshafen (DE)**

(72) Erfinder: **Wendel, Kurt, Dr.**
**Woehlerstrasse 26**
**D-6700 Ludwigshafen (DE)**
Erfinder: **Bankowsky, Heinz-Hilmar**
**Otto-Dill-Strasse 1 c**
**D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 130 336 B1

Jouve, 18, rue St-Denis, 75001 Paris, France

## Beschreibung

Die Erfindung betrifft wäßrige Druckfarben, die als Bindemittel ein durch Zusatz von Ammoniak oder Aminen zumindest teilweise neutralisiertes Gemisch aus einer wäßrigen Copolymerisatdispersion und einer aliphatischen Dihydrazin-Verbindung enthält.

Wäßrige Druckfarben finden hauptsächlich beim Bedrucken von Papier und Wellpappe Verwendung. Erhöhte Anforderungen an die Luftreinhaltung haben zu einem steigenden Bedarf an wäßrigen Druckfarben, auch für nicht saugfähige Druckträger geführt, wie z. B. Polyolefin-, PVC-, Polyester-, Cellglas- und Aluminiumfolien.

Bisher waren für diese Art von Druckfarben gebräuchliche Bindemittel Maleinatharze, saure Polyesterharze und Acrylatharzlösungen verwendet, wie sie z. B. in DE-A 24 21 826, US-A 4 166 811 sowie JP-A 53 083 809 beschrieben sind. Nachteilig bei den bisher bekannten und auf dem Markt befindlichen Produkten ist die oftmals mangelhafte Haftfestigkeit auf vorbehandelten Polyolefinfolien, Cellglas, Aluminium und Polyesterfolien, der niedrige Glanz der Drucke, die ungenügende Wasserfestigkeit und die häufig auftretenden Inhomogenitäten, die das äußere Erscheinungsbild der Drucke stören sowie die unbefriedigende Lagerstabilität und die damit zusammnenhängenden Schwankungen in der Viskosität der Druckfarben, die die Verarbeitung erschweren.

Aus der EP-A 3516 sind wäßrige Dispersionen von Carbonylgruppen und ggf. Carboxylgruppen aufweisenden Copolymerisaten bekannt, denen Hydrazinderivate und zur Vermeidung der Gegenwart von freiem Hydrazin Schwermetallsalze zugesetzt sind. Diese können als Bindemittel für pastöse Druckfarben für den Textildruck dienen, sind jedoch u. a. wegen ihrer hohen Viskosität und unbefriedigenden Redispergierbarkeit für Druckfarben für den Flexo- und Tiefdruck nicht geeignet.

Aufgabe der Erfindung war es deshalb, wäßrige Druckfarben für den Flexo- und Tiefdruck aufzuzeigen, die die Nachteile des aufgeführten Standes der Technik nicht aufweisen. Dabei sollte die Druckfarbe mit ihrem Bindemittel auch bei einem nur geringen Anteil an wassermischbaren organischen Lösemitteln eine niedrige Viskosität aufweisen. Die das Bindemittel enthaltenden Druckfarben sollen ferner eine gute Pigmentverträglichkeit, Viskositätsstabilität nach Lagerung, Geruchsneutralität und eine gute Verdruckbarkeit zeigen. Wesentliche Bedeutung kommt außerdem der Naßwischfestigkeit nach dem Trocknen der Druckfarbe zu.

Außerdem sollte eine gute Haftfestigkeit auf dem Substrat auch nach längerer Lagerung des Druckes in Wasser erhalten bleiben und eine absolute Chargenkonstanz der wäßrigen Druckfarben gewährleistet sein.

Dieses Ziel wird überraschenderweise mit den erfindungsgemäßen Druckfarben erreicht.

Gegenstand der vorliegenden Erfindung sind wäßrige Druckfarben für den Flexodruck und Tiefdruck mit einer Viskosität, die einer Auslaufzeit zwischen 16 und 40 Sekunden, gemessen im Auslaufbecher nach DIN 53211 mit 4 mm Düse bei 23 °C entspricht, die als Bindemittel ein durch Zusatz von Ammoniak oder flüchtigen organischen Aminen zumindest teilweise neutralisiertes Gemisch aus

(A) einer wäßrigen Dispersion eines Copolymerisats, das eine Glastemperatur zwischen 0 und 70 °C aufweist und einpolymerisiert enthält

(a) 70 bis 97,5 Gewichtsprozent mindestens eines Monomeren aus der Gruppe der Acryl- oder Methacrylsäureester von 1 bis 8 Kohlenstoffatome enthaltenden Monoalkanolen, Vinylaromaten, Vinylester von 2 bis 10 Kohlenstoffatome enthaltenden Monocarbonsäuren, Vinylchlorid, Acrylnitril und Methacrylnitril,

(b) 2 bis 15 Gewichtsprozent Acrylsäure oder Methacrylsäure, die teilweise durch polymerisierbare olefinisch ungesättigte Dicarbonsäuren oder deren Halbester ersetzt sein können,

(c) 0,5 bis 10 Gewichtsprozent mindestens eines copolymerisierbaren, olefinisch ungesättigten Ketons oder Aldehyds, sowie

(d) 0 bis 5 Gewichtsprozent weiterer, unter (a) bis (c) nicht genannter copolymerisierbarer olefinisch ungesättigter monomerer organischer Verbindungen,

mit der Maßgabe, daß die Summe der unter (a) bis (d) genannten Prozentzahlen 100 ist, und

(B) je Mol Keton- oder Aldehydgruppe des in der wäßrigen Dispersion (A) enthaltenen Copolymerisats 0,2 bis 1 Mol wasserlösliche aliphatische Dihydrazin-Verbindungen.

Gegenstand der vorliegenden Erfindung ist außerdem die Verwendung der wäßrigen Druckfarben zum Bedrucken von Papier, Kunststoff- oder Metallfolien.

Je nach dem Carboxylgruppengehalt des Copolymerisats im Bindemittel ist dieses durch Zusatz von Ammoniak oder Aminen quellbar bis löslich. Dadurch, daß die Bindemittel der erfindungsgemäßen Druckfarben alkaliquellbar sind, ergeben sich Vorteile in der Verdruckbarkeit gegenüber üblichen Druckfarben, da auch nach einer Antrocknung der Druckfarbe auf dem Druckzylinder eine Wiederauflösung, bzw. Redispergierung durch nachfolgende frische Druckfarbe gewährleistet ist, bzw. eine Reinigung durch wäßriges Alkali möglich ist.

Bezüglich der Aufbaukomponenten der Bindemittel der erfindungsgemäßen Druckfarben ist im einzelnen folgendes auszuführen :

(A) Als wäßrige Dispersionen von Copolymerisaten, die eine Glastemperatur zwischen 0 und 70, vorzugsweise 15 und 50 °C aufweisen und die unter (a) bis (d) genannten Monomeren einpolymerisiert enthalten, eignen sich im allgemeinen entsprechende wäßrige Copolymerisatdispersionen mit einem Gehalt an 20 bis 65, vorzugsweise 40 bis 55 Gewichtsprozent Copolymerisat.

Die wäßrigen Copolymerisatdispersionen (A) können in an sich üblicher Weise durch Copolymerisation der Monomeren in wäßriger Emulsion unter Verwendung der üblichen Emulgier- und Dispergierhilfsmittel hergestellt sein. Als Emulgier- und Dispergierhilfsmittel enthalten sie meist 0,2 bis 3 Gewichtsprozent, bezogen auf die Menge des Copolymerisats, anionische und/oder nichtionische Emulgatoren, wie Natriumdialkylsulfosuccinate, Natriumsalze von sulfatierten Ölen, Natrium-, Kalium- und Ammoniumalkylsulfate, bzw. -sulfonate, Alkalisalze von Alkylbenzolsulfonsäuren, Alkalisalze von oxalkylierten und sulfatierten Alkylphenolen, sowie ferner oxethylierte Alkylphenole. Die Copolymerisate haben eine Glastemperatur von 0 bis 70 °C. Die Glastemperatur wird nach üblichen Methoden, z. B. aus der Messung des E-Moduls im Kriechversuch als Funktion der Temperatur oder mit der DTA (= Differentialthermoanalyse) bestimmt.

(a) Als Komponente (a) können die für das Bindemittel zu verwendenden Copolymerisate Monomere aus der Gruppe der Acryl- oder Methacrylsäureester von 1 bis 8, vorzugsweise 1 bis 4 Kohlenstoffatome enthaltenden Monoalkanolen, vorzugsweise n-Butylacrylat, Isobutylacrylat, tert.-Butylacrylat, Methylacrylat, Ethylacrylat, insbesondere Methylmethacrylat, Vinylaromaten, wie z. B. Styrol, Vinylester von 2 bis 10 Kohlenstoffatome enthaltenden Monocarbonsäuren, wie z. B. Vinylacetat, Vinylpropionat, Vinylpivalat, Vinylversatat, Vinylchlorid, Acrylnitril und Methacrylnitril bzw. Gemische der genannten Monomeren einpolymerisiert enthalten. Besonders bevorzugt als Komponente (a) sind Ethylacrylat, Butylacrylat und Methylmethacrylat, sowie deren Gemische mit Styrol.

Komponente (a) ist im Copolymerisat in Mengen von 70 bis 97,5, vorzugsweise 80 bis 95 Gewichtsprozent einpolymerisiert.

(b) Als Komponente (b) kommen Acrylsäure und Methacrylsäure in Betracht, die teilweise, etwa bis zu 50 Gewichtsprozent durch polymerisierbare olefinisch ungesättigte Dicarbonsäuren, wie z. B. Maleinsäure, Fumarsäure, Itaconsäure, oder deren Halbester mit 1 bis 4 Kohlenstoffatome enthaltenden Alkanolen ersetzt sein können. Als Komponente (b) bevorzugt sind Acrylsäure und Methacrylsäure. Komponente (b) ist im Copolymerisat in Mengen von 2 bis 15, vorzugsweise 4 bis 10 Gewichtsprozent einpolymerisiert.

(c) Als copolymerisierbare olefinisch ungesättigte Ketone oder Aldehyde kommen in Frage Monomere mit mindestens einer Aldo- oder Keto-gruppe und einer polymerisierbaren Doppelbindung. Von besonderem Interesse sind Acrolein, Methacrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxy-alkylpropanale der allgemeinen Formel (I)

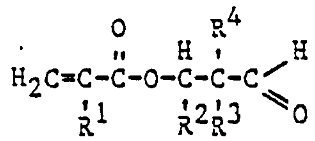

(I)

in der $R^1$ für —H oder —$CH_3$, $R^2$ für —H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)acryloxyalkylpropanale können nach dem Verfahren der DE-PS 27 22 097 durch Veresterung von ß-Hydroxyalkylpropanalen der allgemeinen Formel (II)

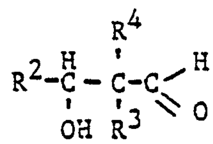

(II)

in der $R^2$, $R^3$ und $R^4$ die für die allgemeine Formel (I) angegebene Bedeutung haben, mit Acryl- oder Methacrylsäure in Gegenwart von indifferenten Verdünnungsmitteln sowie geringen Mengen Sulfonsäuren und Mineralsäuren bei Temperaturen von 40 bis 120, insbesondere von 60 bis 90 °C hergestellt werden. Als Ketogruppen tragende Monomere kommen ferner Diacetonacrylat, Diacetonmethacrylat, Acetonylacrylat, 2-Hydroxypropylacrylatacetylacetat und Butandiol-1,4-acrylatacetylacetat in Frage. Die Menge der Carbonyl- bzw. Ketogruppen aufweisenden einpolymerisierten Comonomeren (c) beträgt 0,5 bis 10, vorzugsweise 1 bis 5 Gewichtsprozent, bezogen auf Copolymerisat.

(d) Als weitere unter (a) bis (c) nicht genannte copolymerisierbare olefinisch ungesättigte monomere organische Verbindungen, die ggf. im erfindungsgemäß zu verwendenden Copolymerisat in Mengen bis zu 5, vorzugsweise bis zu 3 Gewichtsprozent einpolymerisiert sein können, kommen in Frage Amide der (Meth)acrylsäure, bzw. deren Methylolierungsprodukte, Mono (meth) acrylester von $C_1$- bis $C_6$-Dialkoholen, olefinisch ungesättigte polymerisierbare Sulfonsäure, wie Vinylsulfonsäure oder 2-Methyl-2-acrylamidopropansulfonsäure bzw. deren Gemische. Die Summe der unter (a) bis (d) genannten Prozentzahlen ist 100.

(B) Die Bindemittel der erfindungsgemäßen Druckfarben enthalten als Komponente (B) 0,2 bis 1 Mol mindestens einer wasserlöslichen aliphatischen Dihydrazinverbindung je Mol Keton- oder Aldehydgruppe des in der wäßrigen Dispersion (A) enthaltenen Copolymerisats. Geeignete Dihydrazin-Verbindungen (B) sind vor allem Dihydrazide aliphatischer 2 bis 10, insbesondere 4 bis 6 C-Atome enthaltender Dicarbonsäuren, wie Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet sind ferner wasserlösliche aliphatische, 2 bis 4 C-Atome aufweisende Dihydrazine, wie Ethylen-1,2-dihydrazin, Propylen-1,3-dihydrazin und Butylen-1,4-dihydrazin. Besonders bevorzugt als Komponente (B) sind Adipinsäuredihydrazid und Bernsteinsäuredihydrazid.

Die Mischung aus wäßriger Copolymerisatdispersion (A) und Dihydrazinverbindung (B) lassen sich nach zumindest teilweiser Neutralisation mit Ammoniak oder dessen Gemischen mit organischen Aminen, wie z. B. Triethanolamin oder Morpholin, oder zumindest teilweiser Neutralisation mit flüchtigen organischen Aminen, sehr vorteilhaft als Bindemittel für die erfindungsgemäßen Druckfarben verwenden.

Die wäßrigen Druckfarben enthalten als Bindemittel im allgemeinen Kombinationen aus

15 bis 30 Gewichtsteilen Bindemittelgemisch aus (A)+(B), (fest gerechnet)
1 bis 5 Gewichtsteilen Ammoniak konz.
0 bis 20 Gewichtsteilen eines Alkohols, wie z. B. Ethanol, n-Propanol oder Isopropanol
84 bis 45 Gewichtsteilen Wasser.

Dispersionen dieser Konzentration und Zusammensetzung weisen im allgemeinen eine Auslaufzeit von 10 bis 30 Sekunden im Auslaufbecher mit 4 mm Düse nach DIN 53 211 auf.

Die erfindungsgemäßen Druckfarben zeichnen sich durch gleichbleibende Qualität hinsichtlich der Lagerbeständigkeit, Glanzgebung, Haftfestigkeit, Verhalten auf der Druckmaschine und insbesondere Naßwischfestigkeit und Geruchsneutralität aus und eignen sich, außer für den Flexodruck, auch für den wäßrigen Tiefdruck.

Die Pigmente, die zur Herstellung der Druckfarben verwendet werden, können aus den üblichen Pigmenten ausgewählt werden die für wäßrige Tiefdruck- oder Flexodruckfarben brauchbar sind.

Zur Verbesserung der Scheuerfestigkeit eines mit der erfindungsgemäßen Druckfarbe hergestellten Druckfilmes können der Druckfarbe zusätzlich noch mikrokristallines Wachs, Polyethylenwachs, unter Umständen als wäßrige Dispersion, oder auch andere für Druckfarben übliche Modifizierungsmittel zugesetzt werden.

Die wäßrigen Druckfarben enthalten die angegebenen Bindemitteldispersionen mit etwa 40 Gewichtsprozent Feststoffgehalt im allgemeinen in einer Menge von 40 bis 90 Gewichtsprozent, vorzugsweise 45 bis 85 Gewichtsprozent, bezogen auf die gesamte Druckfarbe. Die Mischung mit Pigmentpräparationen oder das Anreiben mit anorganischen und organischen Pigmenten kann mit den üblichen Misch- bzw. Anreibeaggregaten durchgeführt werden. Besonders vorteilhaft ist, wenn man Pigmente verwendet, die in einem besonderen Finishprozeß für die Dispergierung in wäßrigen Medien ausgerüstet wurden oder wäßrige Pigmentpräparationen.

Die in den Beispielen genannten Teile und Prozente beziehen sich auf das Gewicht.

I. Herstellung der Druckfarbenbindemittel

## Beispiel 1

Als Polymerisationsapparatur wurde ein Vierhalskolben verwendet, der mit Rührer, Thermometer, Rückflußkühler und zwei Zulaufgefäßen versehen war. Das Zulaufgefäß I enthielt eine wäßrige Emulsion aus 225 Teilen n-Butylacrylat, 225 Teilen Methylmethacrylat, 40 Teilen Methacrylsäure, 10 Teilen Diacetonacrylamid (= DAAM), 5 Teilen t-Dodecylmercaptan, 17,9 Teilen einer 28 %igen wäßrigen Lösung des Natriumsalzes eines sulfatierten Umsetzungsprodukts aus einem geradkettigen $C_{12}/C_{14}$-Kokosfettalkohol mit 2,5 Mol Ethylenoxid (als Emulgator) und 363 Teilen Wasser. Der Zulauf II bestand aus der Lösung von 2,5 Teilen Natriumperoxodisulfat in 150 Teilen Wasser. Im Reaktionsgefäß wurden 181 Teile wasser, 18 Teile des Zulaufs I und 15 Teile des Zulaufs II vorgelegt und unter Rühren auf 85 °C erhitzt. Dann wurden bei dieser Temperatur unter weiterem Rühren Zulauf I innerhalb von 120 Minuten und Zulauf II innerhalb von 180 Minuten zugegeben. Danach wurde die Temperatur noch 120 Minuten bei 85 °C gehalten und dann auf Raumtemperatur abgekühlt, wobei man ab 60 °C noch 80 Teile einer 2,5 %igen wäßrigen Ammoniak-Lösung zufließen ließ. Die erhaltene Dispersion wurde über ein feines Sieb abfiltriert und so eine 39 %ige Dispersion erhalten.

250 Teile dieser Dispersion wurden mit 5 Teilen einer 20 %igen wäßrigen Lösung von Adipinsäuredihydrazid (= ADDH) versetzt. (Molverhältnis DAAM : ADDH ca. 2 : 1).

Beispiel 2

In analoger Weise wurde wie in Beispiel 1 beschrieben eine Dispersion hergestellt, deren Copolymerisat aus 275 Teilen Ethylacrylat, 125 Teilen Methylmethacrylat, 50 Teilen Styrol, 40 Teilen Methacrylsäure und 10 Teilen Diacetonacrylamid zusammengesetzt war.

250 Teile dieser 39 %igen Dispersion wurden mit 5 Teilen einer 20 %igen wäßrigen Lösung von Adipinsäuredihydrazid versetzt. (Molverhältnis DAAM : ADDH ca. 2 : 1.).

Beispiel 3

In Analogie zu Beispiel 1 wurde nach gleichem Verfahren und mit den gleichen Hilfsstoffen eine Polymerdispersion aus 275 Teilen Ethylacrylat, 180 Teilen Methylmethacrylat, 35 Teilen Acrylsäure und 10 Teilen Methacrolein hergestellt.

Zu 500 Teilen dieser 38 %igen Dispersion wurden 23,6 Teile einer 20 %igen wäßrigen Lösung von Adipinsäuredihydrazid zugefügt. (Molverhältnis Methacrolein : ADDH ca. 2 : 1.).

II. Herstellung wäßriger Druckfarben

Es werden unterschiedlich zusammengesetzte wäßrige Druckfarben für den Flexodruck und den wäßrigen Tiefdruck nach folgender Rezeptur hergestellt und vergleichend geprüft :

20 % einer handelsüblichen wäßrigen Pigmentpräparation z. B. (R)BASOFLEX-Pigmente der BASF A.G. werden mit 80 % einer auf Verarbeitungsbedingungen eingestellten Bindemitteldispersion bei Raumtemperatur unter Rühren vermischt.

Die auf Verarbeitungsbedingungen eingestellte Bindemitteldispersion ist aufgebaut aus :

36 Teilen des Bindemittels (= Gemisch (A) + (B)) gemäß einem der Beispiele 1 bis 3
16 Teilen i-Propanol
2 Teilen konzentriertem Ammoniak
5 Teilen Polyethylenwachs-Dispersion
41 Teilen Wasser.

Die Auslaufzeiten der Duckfarben liegen zwischen etwa 16 und 40 Sekunden, gemessen im DIN-Becher mit 4 mm Düse bei 23 °C. Nach einer Lagerung der Druckfarben bei 50 °C über drei Tage steigt die Viskosität nicht an. Druckfarben mit Harzen der herkömmlichen Art neigen zum Ansteigen der Viskosität. Dieser Viskositätsanstieg ist ein bedeutender Nachteil der Druckfarben mit herkömmlichen Bindemitteln, da auf den Druckmaschinen nur Druckfarben verarbeitet werden können, die eine niedrige Viskosität aufweisen.

Zur weiteren anwendungstechnischen Prüfung werden die Druckfarben mit einer 12 µm Rakel auf die verschiedenen Substrate aufgetragen. Die Trocknung erfolgt in der Wärme im allgemeinen bei 40 bis 80 °C, um eine möglichst vollständige Verdunstung der flüchtigen Anteile zu erreichen. Die Bestimmung der Wasserfestigkeit kann nach DIN 16 524 erfolgen oder durch Bestimmung der sogenannten Naßwischfestigkeit.

Bei dieser Methode wird ein feuchtes Vlies unter Belastung von ca. 1 kg/cm$^2$ über den Druck gezogen. Die Beurteilung der Ergebnisse erfolgt optisch durch den Vergleich der unterschiedlich angefärbten Vliese nach dem Graumaßstab gemäß DIN 54 002. Die erfindungsgemäßen Druckfarben erreichen bei diesem Test die Stufe 4, während Druckfarben mit herkömmlichen Harzen aus der Klasse der gesättigten Polyesterharze und Maleinatharze nur die Stufe 3 erreichen.

Sollen wäßrige Druckfarben zum Bedrucken von Tapeten eingesetzt werden, so wird von den Drucken neben der üblichen Naßwischfestigkeit auch eine Beständigkeit gegen schwach alkalische Reinigungslösungen erwartet. Prüft man die Drucke, wie bei der Bestimmung der Naßwischfestigkeit beschrieben, mit einer verdünnten Spülmittellösung, so erreicht man mit den erfindungsgemäßen Druckfarben die Stufe 4 nach dem Graumaßstab, während Druckfarben mit herkömmlichen Harzen nur die Stufe 2 erreichen.

Die Haftfestigkeit der Drucke wird auf durch Coronaentladung vorbehandelter Polyethylenfolie, die eine Mindestoberflächenspannung von 38 dyn/cm aufweisen soll, geprüft. Die Prüfung erfolgt nach dem sogenannten « Tesaabrißtest ». Im Vergleich zu Druckfarben mit den herkömmlichen Harzen aus der Klasse der gesättigten Polyester, der Maleinatharze und der Acrylatharze ergeben die erfindungsgemäßen Druckfarben eine gute Haftfestigkeit auf Polyethylen (= PE). Haftfestigkeit ist auch auf Zellglas-, Aluminium- und Polyesterfolien gegeben.

Zur Bestimmung der sogenannten Naßhaftfestigkeit werden Drucke auf vorbehandeltem Polyethylen oder Aluminiumfolie 24 Stunden lang in Wasser bei Raumtemperatur gelagert. Unmittelbar danach erfolgt die Prüfung der Haftfestigkeit nach dem « Tesaabrißtest ». Gegenüber Druckfarben mit herkömmlichen Bindemitteln zeichnen sich die erfindungsgemäßen Druckfarben durch eine sehr gute Haftfestigkeit aus.

Auf Weich-PVC weisen die Drucke eine hohe Beständigkeit gegen die sogenannte « Migration » des Weichmachers auf. Selbst nach einer 24-stündigen Lagerung der Drucke bei 50 °C bleibt die Oberfläche klebfrei.

Die Ergebnisse der anwendungstechnischen Prüfung der Druckfarben sind in der folgenden Tabelle zusammengestellt.

| Druckfarben-Bindemittel gemäß: | ALZ DIN 4mm | NWF sofort | NWF nach 24 Stunden | Haftung auf PE vorbehandelt *) | Naßhaftung bis **) | Haftung auf PVC*) |
|---|---|---|---|---|---|---|
| Beispiel 1 | 16" | 4-5 | 4-5 | 1-2 | > 20h | 1 |
| Beispiel 2 | 23" | 4-5 | 4-5 | 1-2 | > 20h | 2 |
| Beispiel 3 | 36" | 5 | 5 | 1-2 | 30' | 4 |

Abkürzungen:
NWF = Naßwischfestigkeit
ALZ = Auslaufzeit
*) = Haftung geprüft nach dem sog. « Tesaabrißtest » (1 = sehr gute Haftung ; 5 = keine Haftung)
**) = Prüfung der Haftfestigkeit nach verschieden langer Wasserlagerung (mittels « Tesaabrißtest »)

## Patentansprüche

1. Wäßrige Druckfarben für den Flexodruck und Tiefdruck mit einer Viskosität, die einer Auslaufzeit zwischen 16 und 40 Sekunden, gemessen im Auslaufbecher nach DIN 53 211 mit 4 mm Düse bei 23 °C entspricht, enthaltend als Bindemittel ein durch Zusatz von Ammoniak oder flüchtigen organischen Aminen zumindest teilweise neutralisiertes Gemisch aus

(A) einer wäßrigen Dispersion eines Copolymerisats, das eine Glastemperatur zwischen 0 und 70 °C aufweist und einpolymerisiert enthält

(a) 70 bis 97,5 Gew.-% mindestens eines Monomeren aus der Gruppe der Acryl- oder Methacrylsäureester von 1 bis 8 Kohlenstoffatome enthaltenden Monoalkanolen, Vinylaromaten, Vinylester von 2 bis 10 Kohlenstoffatome enthaltenden Monocarbonsäuren, Vinylchlorid, Acrylnitril und Methacrylnitril,

(b) 2 bis 15 Gew.-% Acrylsäure oder Methacrylsäure, die teilweise durch polymerisierbare olefinisch ungesättigte Dicarbonsäuren oder deren Halbester ersetzt sein können.

(c) 0,5 bis 10 Gew.-% mindestens eines copolymerisierbaren, olefinisch ungesättigten Ketons oder Aldehyds, sowie

(d) 0 bis 5 Gew.-% weiterer, unter (a) bis (c) nicht genannter copolymerisierbarer olefinisch ungesättigter monomerer organischer Verbindungen,

mit der Maßgabe, daß die Summe der unter (a) bis (d) genannten Prozentzahlen 100 ist, und

(B) je Mol im Copolymerisat (A) enthaltener Keton- oder Aldehydgruppe 0,2 bis 1 Mol wasserlöslicher aliphatischer Dihydrazin-Verbindungen.

2. Wäßrige Druckfarbe nach Anspruch 1, dadurch gekennzeichnet, daß das Copolymerisat (A) als Komponente (a) Ethylacrylat, Butylacrylat und/oder Methylmethacrylat oder deren Gemische mit Styrol einpolymerisiert enthält.

3. Wäßrige Druckfarbe nach Anspruch 1 oder 2, dadurch gekennzeichnet, daß das Copolymerisat (A) als Komponente (b) 4 bis 10 Gew.-% Acrylsäure und/oder Methacrylsäure einpolymerisiert enthält.

4. Wäßrige Druckfarbe nach einem der Ansprüche 1 bis 3, dadurch gekennzeichnet, daß das Copolymerisat (A) als Komponente (c) mindestens eines der Monomeren Acrolein oder Methacrolein, Diaceton(meth)acrylamid, Diaceton(meth)acrylat, Formylstyrol, ein Vinylalkylketon mit 4 bis 7 Kohlenstoffatomen, Acetonylacrylat, 1,2-Propandiol- oder 1,4-Butandiol-acrylat-acetylacetat oder β-(Meth)acryloxy-α-$C_1$-$C_3$-alkyl-α-$C_1$-$C_4$-alkyl-propanal, in dem ein Wasserstoffatom am β-C-Atom durch einen $C_1$-$C_3$-Alkylrest ersetzt sein kann, einpolymerisiert enthält.

5. Wäßrige Druckfarbe nach einem der Ansprüche 1 bis 4, dadurch gekennzeichnet, daß die Dihydrazin-Verbindungen (B) Dihydrazide aliphatischer 2 bis 10 Kohlenstoffatome enthaltender Dicarbonsäuren sind.

6. Wäßrige Druckfarbe nach einem der Ansprüche 1 bis 5, dadurch gekennzeichnet, daß sie wäßrige Pigmentpräparationen oder für die Dispergierung in wäßrigen Medien ausgerüstete Pigmente enthält.

7. Verwendung wäßriger Druckfarben gemäß einem der Ansprüche 1 bis 6 zum Bedrucken von Papier, Kunststoff- oder Metallfolien.

## Claims

1. An aqueous printing ink for flexographic and intaglio printing which has a viscosity which corresponds to an efflux time of from 16 to 40 seconds, measured in a German Standard Specification DIN 53 211 efflux cup with a 4 mm nozzle at 23 °C, containing as a binder a mixture, at least partially neutralized by the addition of ammonia or a volatile organic amine, of

(A) an aqueous dispersion of a copolymer which has a glass transition temperature of from 0 to 70 °C and contains in copolymerized form

(a) from 70 to 97.5 % by weight of at least one monomer from the group consisting of the acrylic or methacrylic esters of monoalkanols of from 1 to 8 carbon atoms, aromatic vinyls, vinyl esters of monocarboxylic acids containing from 2 to 10 carbon atoms, vinyl chloride, acrylonitrile and methacrylonitrile,

(b) from 2 to 15 % by weight of acrylic acid or methacrylic acid, which may partly be replaced by a polymerizable olefinically unsaturated dicarboxylic acid or a monoester thereof,

(c) from 0.5 to 10 % by weight of at least one copolymerizable olefinically unsaturated ketone or aldehyde, and

(d) from 0 to 5 % by weight of a further copolymerizable olefinically unsaturated monomeric organic compound not mentioned under (a) to (c),

with the proviso that the percentages mentioned under (a) to (d) add up to 100, and

(B) from 0.2 to 1 mole of a water-soluble aliphatic dihydrazine compound per mole of ketone or aldehyde group present in copolymer (A).

2. An aqueous printing ink as claimed in claim 1, wherein the copolymer (A) contains as component (a) ethyl acrylate, butyl acrylate and/or methyl methacrylate or a mixture thereof with styrene in copolymerized form.

3. An aqueous printing ink as claimed in claim 1 or 2, wherein the copolymer (A) contains as component (b) from 4 to 10 % by weight of acrylic acid and/or methacrylic acid in copolymerized form.

4. An aqueous printing ink as claimed in any one of claims 1 to 3, wherein the copolymer (A) contains as component (c) at least one of the monomers acrolein or methacrolein, diacetone (meth)acrylamide, diacetone (meth)acrylate, formylstyrene, a vinyl alkyl ketone of from 4 to 7 carbon atoms, acetonyl acrylate, 1,2-propanediol acrylate acetylacetate, 1,4-butanediol acrylate acetylacetate or β-(meth)acryloxy-α-$C_1$-$C_3$-alkyl-α-$C_1$-$C_4$-alkylpropanal, where one hydrogen atom on the β-carbon atom may be replaced by a $C_1$-$C_3$-alkyl, in copolymerized form.

5. An aqueous printing ink as claimed in any one of claims 1 to 4, wherein the dihydrazine compound (B) is a dihydrazide of an aliphatic dicarboxylic acid containing from 2 to 10 carbon atoms.

6. An aqueous printing ink as claimed in any one of claims 1 to 5, which contains an aqueous pigment preparation or a pigment formulated for dispersion in an aqueous medium.

7. The use of an aqueous printing ink as claimed in any one of claims 1 to 6 for printing paper, plastics film or metal foil.

## Revendications

1. Encres d'impression aqueuses pour flexographie et héliographie ayant une viscosité qui correspond à une durée d'écoulement comprise entre 16 et 40 secondes, mesurée dans un bécher d'écoulement selon la norme DIN 53 211 avec un ajutage de 4 mm et à une température de 23 °C, contenant comme liant un mélange au moins partiellement neutralisé par addition d'ammoniac ou d'amines organiques liquides de

A) une dispersion aqueuse d'un copolymère qui a une température de transition vitreuse de 0 à 70 °C et qui contient en chaîne polymère

a) 70 à 97,5 % en poids d'au moins un monomère du groupe des esters d'acide acrylique ou méthacrylique avec des monoalcools ayant de 1 à 8 atomes de carbone, des vinylaromatiques, des esters vinyliques d'acides monocarboxyliques ayant de 2 à 10 atomes de carbone, du chlorure de vinyle, de l'acrylonitrile et du méthacrylonitrile,

b) 2 à 15 % en poids d'acide acrylique ou méthacrylique qui peuvent être remplacés en partie par des acides dicarboxyliques à insaturation oléfinique polymérisables ou leurs esters acides,

c) 0,5 à 10 % en poids d'au moins une cétone ou un aldéhyde à insaturation oléfinique copolymérisables, ainsi que

d) 0 à 5 % en poids d'autres composés organiques monomères à insaturation oléfinique copolymérisables non mentionnés sous a) à c),

à la condition que la somme des pourcentages mentionnés sous a) à d) soit 100, et

B) pour chaque mode de groupement cétone ou aldéhyde contenue dans le copolymère A), de 0,2 à 1 mole de dérivés de dihydrazine aliphatiques hydrosolubles.

2. Encres d'impression aqueuses selon la revendication 1, caractérisées en ce que le copolymère A) contient en chaîne polymère, en tant que composant a), de l'acrylate d'éthyle, de l'acrylate de butyle et/ou le méthacrylate de méthyle ou leurs mélanges avec le styrène.

3. Encres d'impression aqueuses selon la revendication 1 ou 2, caractérisées en ce que le copolymère A) contient en chaîne polymère, en tant que polymère b), de 4 à 10 % en poids d'acide acrylique et/ou méthacrylique.

4. Encres d'impression aqueuses selon la revendication 1, caractérisées en ce que le copolymère A) contient en chaîne polymère, en tant que composant c), au moins l'un des monomères suivants : acroléine ou méthacroléine, diacétone(méth)acrylamide, diacétone (méth)acrylate, formylstyrène, vinylalkylcétone ayant de 4 à 7 atomes de carbone, acrylate d'acétonyle, acrylate-acétylacétate de 1,2-propanediol ou de 1,4-butanediol ou β-(méth) acryloxy-α-(alkyl en $C_1$-$C_3$)-α-(alkyl en $C_1$-$C_4$)-propanal où l'atome d'hydrogène sur l'atome de carbone en β peut être remplacé par un reste alkyle en $C_1$-$C_3$.

5. Encres d'impression aqueuses selon l'une quelconque des revendications 1 à 4, caractérisées en ce que les dérivés de dihydrazine B) sont des dihydrazides d'acides dicarboxyliques contenant de 2 à 10 atomes de carbone.

6. Encres d'impression aqueuses selon l'une quelconque des revendications 1 à 5, caractérisées en ce qu'elles contiennent des préparations de pigment aqueuses ou des pigments adaptés à la dispersion dans des milieux aqueux.

7. Utilisation d'encres d'impression aqueuses selon l'une quelconque des revendications 1 à 6, pour l'impression du papier ou de feuilles de matière plastique ou de métal.